# EUROPÄISCHE PATENTANMELDUNG

(11) **EP 1 071 181 A1**
(43) Veröffentlichungstag der Anmeldung: **24.01.2001**
(21) Anmeldenummer: 99114526.9
(22) Anmeldetag: 23.07.1999
(51) Int. Cl.: H02G 3/08

(54) **Befestigungsmittel**

(71) Anmelder: Endress + Hauser GmbH + Co., 79689 Maulburg (DE)
(72) Erfinder: Schmidt, Robert, 79585 Steinen (DE); Laurinat, Berthold, Dipl.-Ing., 79541 Lörrach (DE)
(74) Vertreter: Andres, Angelika

(57) **Zusammenfassung**

Es wird ein Befestigungsmittel (7) vorgeschlagen für Durchführungen aller Art an Gehäusen (1), insbesondere Kunststoffgehäusen, an denen mindestens zwei Durchführungen (2a, 2b) in Form von kurzen, hohlzylindrischen Fortsätzen angeformt sind, die Zugänge ins Gehäuseinnere ermöglichen und an denen mittels dort befestigter Adapter (5a, 5b) verschiedene Leitungen, wie Versorgungsleitungen und/oder Signalleitungen und dgl. für ein im Gehäuse (1) befindliches Gerät befestigt werden.

Das Befestigungsmittel (7) besteht aus einer scheibenartigen Grundplatte (8), in der Öffnungen vorgesehen sind, deren Innenflächen so geformt sind, daß die Grundplatte (8) auf alle Adapter (5a, 5b) paßt und diese so untereinander verbindet und gegeneinander verspannt. Damit wird erreicht, daß beim Einschrauben und Festziehen von Kabelanschlüssen oder solchen von anderen Leitungen in die Adapter (5) eine Überbeanspruchung der Verbindung der Adapter (5a, 5b) mit dem Gehäuse (1) vermieden wird.

## Beschreibung

Die Erfindung bezieht sich auf ein Befestigungsmittel für Adapter, insbesondere Kabeleinführungen, in Wanddurchbrüchen von Gehäusen von verschiedenartigsten Geräten.

An Gehäusen von vielen solcher Geräte sind in deren Gehäusewänden Durchbrüche oder auch an und in die Gehäusewände angeformte Durchführungsaugen vorgesehen, die der Durchführung von Leitungen verschiedenster Art, z.B. elektrischer Versorgungsleitungen, Signalleitungen oder auch Druckmittelleitungen usw., und zur Heranführung dieser Leitungen an bzw. deren Verbindung mit in solchen Gehäusen untergebrachten Geräte dienen. Die erwähnten Durchbrüche bzw. Durchführungsaugen werden nachfolgend zur Vereinfachung zusammengefaßt als "Durchführungen" bezeichnet.

Die Leitungen können selbst Rohre sein oder werden in Rohren oder Schläuchen, z.B. Kabelschläuchen, an die Gehäuse herangeführt und in nachfolgend als "Adapter" bezeichneten Kabeleinführungen, Gewindeadaptern allgemeiner Art, oder auch Stopfen, an den Gehäusen befestigt. Die Adapter selbst sind in die Durchführungen eingeschraubt, eingeschweißt und/oder eingeklebt. Die Gehäuse können somit auch unabhängig von unterschiedlichen Gewindenormen der Rohr-, Schlauch- oder Kabelanschlüsse verwendet werden und ermöglichen, falls erforderlich, den Übergang von einem Gewindetyp, beispielsweise einem Panzergewinde oder einem metrischen Gewinde, auf ein anderen Gewindetyp, z.B. ein zölliges Gewinde.

Um die Geräte so preiswert wie möglich herstellen zu können, werden die Gehäuse heute aus einem geeigneten Kunststoff gefertigt, beispielsweise im Spritzverfahren. Die Adapter hingegen werden vielfach aus Metall hergestellt, da sie die Verbindung zu den meist metallischen Rohr- und Schlauchanschlüssen herstellen sollen.

Aufgrund der unterschiedlichen Materialien kann es bei entsprechend hoher mechanischer Beanspruchung der Adapter zu einer Verformung der aus Kunststoff bestehenden dünnen Gehäuswand und zum Versagen der Verbindung zwischen Adapter und Gehäuse kommen. Ein ähnlich unerwünschter Effekt kann auch dann auftreten, wenn in zuvor in die Durchführungen des Gehäuses eingeschraubte Gewindeadapter Kabel- oder Rohranschlüsse eingeschraubt und mit Hilfe eines Werkzeugs festgezogen werden. Falls der Kunststoff an der Verbindungsstelle überbeansprucht werden sollte, reißt der Gewindeadapter aus, so daß besonders dünnwandige Gehäuse aus Kunststoff vorgeschriebene Prüf- bzw. Zertifierungs-Kriterien häufig nicht erfüllen.

So verlangt beispielsweise die US-Prüfbehörde "FM" (Factury Mutual) von Geräte, bei denen lediglich eine Leitung durch eine einzelne Durchführung mit einem gängigen 3/4"-Adapter-Anschluß oder kleiner zugeführt wird, daß das Gehäuse in einen sogenannten "torque test" bei einem Anzugs- oder Losbrechmoment von 90 Nm keinen Schaden nehmen bzw. der Gewindeadapter nicht ausreißen darf. Für Geräte mit einem Adapter-Anschluß bis zu 1.5" werden sogar 113 Nm verlangt.
Die betreffende US-Behörde FM verlangt für die erwähnten Geräte auch, daß Adapterverbindungen mit einem Anschluß bis zu 3/4" zum Gehäuse in einem sogenannten "bending test" einem Biegemoment von 34 Nm ohne Beeinträchtigung überstehen; für metallische Adapter mit einem Anschluß ab 1" werden sogar 68 Nm gefordert.

Diese Belastungen können bei Kunststoffgehäuse derzeit nur teilweise dadurch erreicht werden, daß die Adapter in den Durchführungen des Gehäuses sehr genau verklebt werden. Klebungen dieser Art sind jedoch aufwendig und damit teuer. Versuche haben jedoch ergeben, daß Klebungen dieser Art bei Belastungen der Adapter mit Momenten von 90 Nm, wie oben erwähnt, versagen.

Der Erfindung liegt daher die Aufgabe zugrunde, ein Befestigungsmittel zu schaffen, mit dem Adapter, insbesondere Gewindeadapter, für Leitungen aller Art an den vorgesehenen Durchführungen eines Gehäuses so befestigt werden, daß die Verbindung auch bei dünnwandigen Kunststoffgehäusen hohen Belastungen, insbesondere die von Prüfbehörden vorgeschriebene Belastungstests erfüllt, wobei auf ein zusätzliches Einkleben der Adapter in den Durchführungen möglichst verzichtet werden kann.

Diese Aufgabe wird nach der Erfindung gelöst durch ein Befestigungsmittel für Adapter und Durchführungen an Gehäusen, insbesondere Gehäusen mit einer Wand von geringer Stärke, in der mindestens zwei Durchführungen (2a, 2b) vorgesehen sind, die Zugänge ins Gehäuseinnere ermöglichen und mit, an oder in denen Leitungen, wie z. B. Signalleitungen, Versorgungsleitungen oder Rohre oder dgl. für ein im Gehäuse befindliches Gerät durch Adapter befestigt werden; das Befestigungsmittel bestehend aus einer Grundplatte mit mindestens zwei Öffnungen, die nach Form und Anordnung den Adaptern entsprechen und deren Innenflächen so geformt sind, daß die Grundplatte formschlüssig auf die Adapter paßt und diese gegeneinander formschlüssig verspannt werden.

Nach einer anderen Variante der Erfindung wird diese Aufgabe gelöst durch Befestigungsmittel für Adapter und Durchführungen an Gehäusen, insbesondere Gehäusen mit einer Wand von geringer Stärke, in der mindestens eine Durchführung vorgesehen ist, die einen Zugang ins Gehäuseinnere ermöglicht und mit, an oder in der eine Leitung, wie z. B. eine Signalleitung, eine Versorgungsleitung oder ein Rohr oder dgl. für ein im Gehäuse befindliches Gerät mittels wenigstens eines Adapters befestigt wird; das Befestigungsmittel bestehend aus einer Grundplatte mit mindestens einer Öffnung, die nach Form und Anordnung dem Adapter entspricht und deren Innenfläche so geformt ist, daß die Grundplatte formschlüssig auf den Adapter paßt und dieser gegenüber dem Gehäuse mittels wenigstens eines Sicherungs- oder Verspannelementes formschlüssig verspannt wird.

Bei einer bevorzugten Ausgestaltung der Erfindung ist vorgesehen, daß bei Gehäusen mit in der bzw. in den Durchführungen eingeschraubten Adaptern, die jeweils einen Außenmehrkant, vorzugsweise einen Außensechskant aufweisen, die jeweilige Innenfläche der Öffnungen in der Grundplatte des Befestigungsmittels als formschlüssig auf die Adapter passende Drei-, Sechs- oder Zwölfkant ausgebildet ist.

Nach anderen bevorzugten Ausgestaltungen der Erfindung mit mehr als zwei Öffnungen liegen diese in Reihe auf einer gemeinsamen Linie und/oder, im Falle einer Winkelscheibe als Grundplatte mit mehr als zwei Öffnungen, liegen die Öffnungen auf mindestens zwei winklig, vorzugsweise rechtwinklig, zueinander verlaufenden Linien.

Gemäß einer weiteren Ausgestaltung der Erfindung weist die Grundplatte bzw. Winkelplatte zur Anpassung an den Verlauf einer Gehäusewand mindestens eine Abkragung auf, so daß die Öffnungen in mindestens zwei verschiedenen Ebenen liegen.

Nach einer anderen Ausführungsform der Erfindung hat die Grundplatte die Form eines gleichseitigen Dreiecks mit abgerundeten Ecken, wobei in jeder Ecke eine Öffnung liegt.

Wieder andere Ausgestaltungen der Erfindung beziehen sich auf eine Grundplatte, die aus einem glasfaserverstärktem Kunststoff oder aus einem Metallblech, vorzugsweise aus rostfreiem Stahl besteht.

Bei einer weiteren Ausgestaltung des Befestigungsmittels nach der Erfindung ist das Sicherungs- bzw. Verspannelement eine besonders geformte Ausnehmung der Grundplatte, in die ein entsprechender Fortsatz des Gehäuses ein- bzw. formschlüssig angreift.

Gemäß einer anderen Ausgestaltung umfaßt das Sicherungs- bzw. Verspannelement wenigstens einen an die Grundplatte angeformten gekröpften Fortsatz, der mit einem entsprechenden Widerlager des Gehäuses zusammenwirkt.

Der Erfindung liegt die Idee zugrunde, daß beim Aufstecken des erfindungsgemäßen Befestigungsmittels auf die in den Durchführungen befestigten, insbesondere dort eingeschraubten und durch Drehen ausgerichteten Adapter diese so miteinander verbunden werden, daß beim Einschrauben und Festziehen von Kabelanschlüssen oder anderen Leitungen in die Adapter eine Überbeanspruchung der Adapter-, insbesondere von Gewindeverbindungen und somit ein mögliches Ausbrechen der Adapter vermieden wird. Das beim Anziehen der Leitungsanschlüsse wirkende Drehmoment wird in eine günstigere Biegebelastung umgewandelt.

Ein weiterer besonderer Vorteil eines aus einem Metallblech gefertigten Befestigungsmittels nach der Erfindung ist, daß auftretende Potentialunterschiede an den Anschlüssen ausgeglichen werden, was zu einer höheren Sicherheit für das Gerät führt.

Darüberhinaus lassen sich Befestigungsmittel aus einem Metallblech oder aus Kunststoff einfach und kostengünstig, beispielsweise durch Laserschneiden, herstellen.

Die Erfindung wird im folgenden anhand der beigefügten Zeichnung näher beschrieben. Aus Gründen der Vereinfachung sind Bauteile, Elemente oder - Gruppen, die sich in Form und Funktion gleichen, gegebenenfalls mit gleichen Bezugszeichen versehen. In der Zeichnung zeigen :
- Fig. 1a: in perspektivischer Ansicht ein Gehäuse eines Gerätes mit einer ersten Ausführungsform des Befestigungsmittels nach der Erfindung an zwei Schraubanschlußstellen für die Zu- bzw. Durchführung von Leitungen;
- Fig. 1b: eine Explosionsdarstellung des Gehäuses und des Befestigungsmittels nach Fig. 1a;
- Fig. 2: eine Draufsicht auf das Befestigungsmittel nach Fig. 1;
- Fig. 3: das Befestigungsmittel nach Fig. 2 in perspektivischer Darstellung;
- Fig. 4: eine Draufsicht auf eine zweite Ausführungsform des Befestigungsmittels nach der Erfindung;
- Fig. 5: eine Schnittdarstellung des Befestigungsmittels nach Fig. 4 entlang der Schnittlinie V- V in Fig. 4;
- Fig. 6: eine Draufsicht auf eine dritte Ausführungsform des Befestigungsmittels nach der Erfindung;
- Fig. 7: eine perspektivische Darstellung des Befestigungsmittels nach Fig. 6;
- Fig. 8: eine perspektivische Darstellung einer vierten Ausführungsform des Befestigungsmittels nach der Erfindung;
- Fig. 9: eine perspektivische Darstellung einer fünften Ausführungsform des Befestigungsmittels nach der Erfindung; und
- Fig. 10: ein Gehäuse in perspektivischer Ansicht mit dem Befestigungsmittel nach Fig. 9.

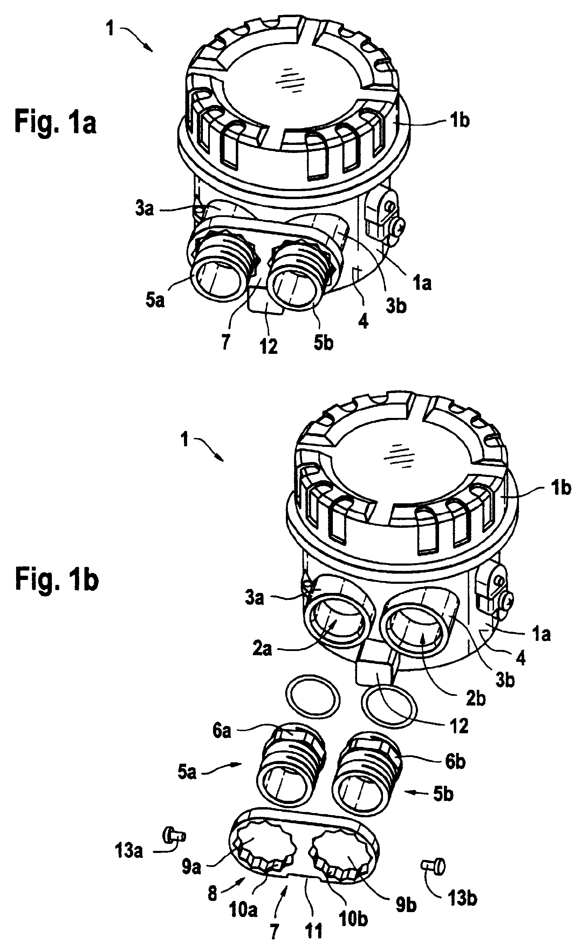

In den Fig. 1a und 1b ist in perspektivischer Darstellung ein im wesentlichen zylindrische Gehäuse 1 eines beliebigen Gerätes wiedergegeben. Das vorzugsweise aus einem geeigneten Kunststoff gefertigte Gehäuse 1 umfaßt einen Gehäuse-Grundkörper 1a, der von einem Gehäuse-Deckel 1b verschlossen ist. In einer, üblicherweise relativ dünnen Wand des Gehäuse- Grundkörpers 1b sind, wie in den Fig.1a und 1b dargestellt, zwei Durchführungen 2a und 2b vorgesehen, die einen Zugang zum Inneren des Gehäuses 1 ermöglichen. Bei dem beispielhaft dargestellten Gehäuse 1 sind seitlich auf dem Grundkörper 1a, genauer: in desen Mantelfläche 4, kurze, hohlzylindrische Anschlußstutzen 3a und 3b in an sich bekannter Weise angeformt, die die Durchführungen 2a und 2b umgebenden und mit diesen jeweils einen Zugang zum Gehäuseinneren für Versorgungs und Signalleitungen des Gerätes (nicht dargestellt) bilden. Vorzugsweise gleichen die Anschlußstutzen 3a und 3b durch ihre Form die hier beispeilhaft dargestellte Rundung der Mantelfläche 4 in der Weise aus, daß ihre von der Mantelfläche 4 abgewandten Ringflächen (siehe Fig. 1b) in einer Ebene liegen.

Die Durchführungen 2 weisen typischerweise ein Innengewinde auf, so daß dort Adapter, vorzugsweise Gewindeadapter 5a, 5b mit Außensechskanten 6a und 6b, beispielsweise aus Metall, einschraubar sind. In Fig. 1b ist ein Gehäuse 1 vor dem Einschrauben der Adapter 5a, 5b dargestellt. Fig. 1a zeigt das Gehäuse mit eingeschraubten Adaptern 5a, 5b.

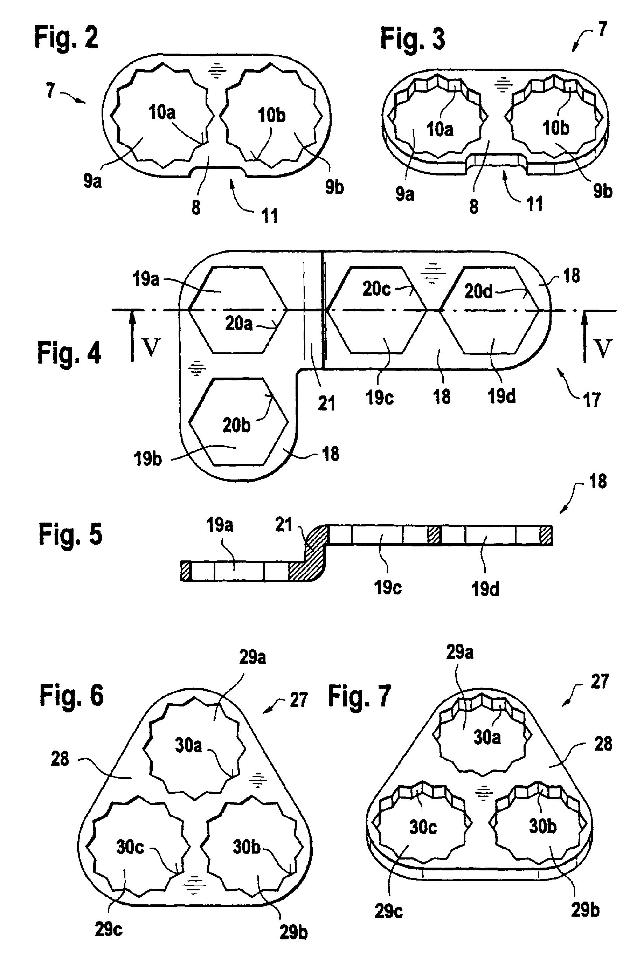

Auf die Gewindeadapter 5a, 5b bzw. deren Außensechskante 6a, 6b ist ein Befestigungsmittel 7 nach der Erfindung (siehe dazu auch Fig. 2 und Fig. 3) aufgesetzt und daran in geeigneter Weise, z.B. mittels Schweißpunkten, durch Kerbstifte oder Kerbnägel 13a, 13b, wie in Fig. 1a dargestellt, befestigt. In die Gewindeadapter 5a, 5b können in bekannter Weise Kabel-, Schlauch- oder Rohranschlüsse für die Zu- und Weiterleitung von Versorgungs- und Signalleitungen oder Kabeln eingeschraubt werden.

Das Befestigungsmittel 7 besteht gemäß Fig. 2 und 3 aus einer scheibenartigen Grundplatte 8, die vorzugsweise aus einem Metallblech, vorzugsweise aus rostfreiem Stahl, gefertigt ist. In ihr sind zwei Öffnungen 9a, 9b vorgesehen, deren Abstand zueinander genau dem der Gewindeadapter 5a, 5b am Gehäuse 1 entspricht. Die Innenflächen 10a, 10b der Öffnungen 9a, 9b sind so geformt, daß beim Aufstecken des Befestigungsmittels 7 auf die Gewindeadapter 5a, 5b an diesen bzw. an ihrem Außensechskant 6a, 6b eine formschlüssige Verbindung hergestellt wird. Wie die Fig. 2 und 3 veranschaulichen, sind die Innenflächen 10a, 10b der Öffnungen 9a, 9b als doppelter Sechskant, also ein Zwölfkant, ausgebildet, was, wie weiter unten noch deutlich wird, Vorteile beim Ausrichten der Gewindeadapter 5a, 5b und dem Aufstzen des Befestigungsmittels 7 hat. Es ist aber durchaus möglich, die Öffnungen 9a, 9b bzw. deren Innenflächen 10a, 10b in anderer Form auszubilden, z.B. als einfachen Sechskant (siehe Fig. 4) oder auch als Dreikant. Für die Erfindung ist es wichtig, daß ein Formschluß zwischen dem Befestigungsmittel 7 und den, im dargestellten Fall Gewindeadaptern 5a, 5b zustande kommt, wobei es ist nicht unbedingt erforderlich ist, daß dieser Formschluß an allen sechs Ecken des Außensechskants 6 der Gewindeadapter 5a, 5b hergestellt wird.

Bei der Montage werden zunächst die Gewindeadapter 5a, 5b in die Durchführungen 2a, 2b bzw. in die Anschlußstutzen 3a, 3b (siehe Fig. 1b) eingeschraubt und es reicht ein geringen Drehmoment von beispielsweise ca. 1 Nm, um sie anzuziehen. Danach werden sie geringfügig weitergedreht und dadurch so ausgerichtet, daß das Befestigungsmittel 7 formschlüssig auf beide Gewindeadapter 5a, 5b aufgesteckt werden kann. Hierbei zeigt sich auch der besondere Vorteil, der sich ergibt, wenn die Innenflächen 10a, 10b der Öffnungen 9a, 9b als doppelter Sechskant ausgebildet sind. Für das gegenseitige Ausrichten der Gewindeadapter 5a, 5b müssen diese dann nämlich nur um maximal 30° verdreht werden, um das Befestigungsmittel 7 auf beide Gewindeadapter 5a, 5b aufsetzen zu können. Im Falle eines einfachen Sechskants an der Innenfläche 10 der Öffnungen 9a, 9b wäre eine Drehung bis zu 60° nötig. Außerdem kann das Befestigungsmittel 7 selbst als Werkzeug für das Ausrichten der Gewindeadapter 5a, 5b benutzt werden. Um zu verhindern, daß das Befestigungsmittel 7 von den Anschlußstutzen 3a, 3b abfällt, durch die in Fig 1b dargestellten Kerbnägel 13a, 13b an den Gewindeadaptern 5a, 5b gesichert. Selbstverständlich sind zu diesem Zweck auch andere Möglichkeiten der Sicherung denkbar, wie z. B. Schweißpunkte, Kerbstifte.

Bei einem nachfolgenden Anschließen, also Einschrauben und Festziehen von Leitungsanschlüssen in die Gewindeadapter 5a, 5b verhindert das Befestigungsmittel 7 durch seine Verbindung der beiden Gewindeadaptern 5a, 5b untereinander deren Überbeanspruchung und somit auch ein Ausreißen der Gewindeadapter 5a, 5b aus den Anschlußstutzen 3a, 3b bzw. den Durchführungen 2a, 2b. Das beim Einschrauben und Festziehen eines Leitungsanschlusses aufgebrachte Drehmoment muß nicht mehr von dem einzelnen Gewindeadapter 5a oder 5b und seiner Schraubverbindung mit Anschlußstutzen 3a oder 3b bzw. mit der Durchführung 2a oder 2b aufgenommen werden, sondern wird durch das Befestigungsmittel 7 jeweils auf beide Gewindeadapter 5a, 5b verteilt. Eine durch den Anbstand seiner Öffnungen 9a, 9b bestimmte Hebelwirkung des Befestigungsmittels 7 wandelt das auf einen Adapter dabei wirkende Einschraub-Drehmoment in eine Biegebelastung um, die besser aufgenommen werden kann und deshalb günstiger ist. Ein interessanter Effekt ist, daß an den beiden Gewindeadaptern 5a, 5b in jeweils entgegengesetzter Richtung angreifende Drehmomente sich ganz oder teilweise kompensieren.

Eine hohe zulässige Biegebelastung an den Gewindeadaptern 5a, 5b ist auch für den normalen Betrieb der Geräte wünschenswert. Wenn Leitungen für ein Gerät z.B. durch Rohre herangeführt werden, die in die Gewindeadapter 5a, 5b eingeschraubt werden, so können durch den langen Hebelarm der Rohre an den Gewindeadaptern 5a, 5b erhebliche Biegekräfte wirksam werden, die dann durch das Befestigungsmittel 7 auf beide Gewindeadapter 5a oder b verteilt werden. So konnte in einem bereits erwähnten sogenannten "bending test" für ein Gehäuse mit zwei 3/4"-Gewindeadaptern 5a, 5b und mit dem Befestigungsmittel 7 ein Biegemoment von 34 Nm und größer erreicht, wohingegen bei einem entsprechenden Test ohne das Befestigungsmittel 7 nur ein Biegemoment von 17 Nm erzielt wurde. Wird die Anordnung so getroffen, daß die möglichen Biegemomente an beiden Gewindeadaptern 5a, 5b in entgegengesetzter Richtung wirken, können sie sich gegenseitig ganz oder teilweise aufheben.

In der Ausführungsform gemäß den Fig. 1b, 2 und 3 weist das Befestigungsmittels 7 an seinem Außenumfang noch eine Ausnehmung 11 auf. Diese ist in ihrer Form an einen Fortsatz 12 am Gehäuse 1 angepaßt, in dem z.B. ein Feuchtigkeitsfilter untergebracht ist, der der Bildung von Kondenswasser im Innern des Gehäuses 1 entgegenwirken soll.

Der Fortsatz 12 erhebt sich in der Weise über die Mantelfläche 4 des Gehäuses 1, daß das Befestigungsmittel 7 mit seiner Ausnehmung 11 daran formschlüssig anliegt, wodurch die gewünschte Wirkung des Befestigungsmittels 7 in Bezug auf die Verteilung von an den einzelnen Gewindeadaptern 5a, 5b angreifenden Momenten noch zusätzlich verbessert wird.

Das Befestigungsmittel 7 bietet noch einen weiteren Vorteil, wenn an den Gewindeadaptern 5a, 5b des Kunststoffgehäuses metallische Rohre angeschlossen werden, in denen elektrische Versorgungsleitungen und Signalleitungen geführt werden. Da es an solchen Rohren immer wieder zu elektrischen Potentialunterschieden kommen kann, die gerade bei Kunststoffgehäusen auszugleichen schwierig ist, kann dies zu einem möglichen Sicherheitsproblem führen. Wenn jedoch das Befestigungsmittel 7, wie beschrieben, aus einem Metallblech besteht, bewirkt es durch seinen formschlüssigen Kontakt mit den metallischen Gewindeadaptern 5a, 5b und damit auch mit den dort angeschlossenen Rohren einen Potentialausgleich. Die elektrische Sicherheit für das Gerät kann noch erhöht werden, indem das Befestigungsmittel 7 geerdet bzw. mit einem elektrischen Masse-Anschluß verbunden wird.

Die Erfindung ist jedoch nicht auf die oben beschriebene Ausführungsform beschränkt. So kann z.B. das Befestigungsmittel 7 auch aus einem glasfaserverstärkten Kunststoff hergestellt werden. In jedem Fall läßt sich das Befestigungsmittel 7 in Form und Größe in vielfältigster Weise an die jeweiligen Erfordernisse und Anwendungen, wie die Zahl und Anordnung von Adaptern bzw. Durchführungen der gewünschten Geräte bzw. Anwendungen anpassen. Die Fig. 4 bis 10 zeigen beispielhaft weitere von vielen denkbaren Variationsmöglichkeiten.

Fig. 4 und 5 zeigen ein anderes Befestigungsmittel 17 nach der Erfindung für ein Gehäuse mit insgesamt vier Anschlußmöglichkeiten für die Zu- und/oder Durchführung von Leitungen, wobei hier lediglich beispielhaft angenommen wurde, daß sich diese vier Anschlußmöglichkeiten an dem betreffenden Gehäuse nicht alle auf einer Linie und auch nicht auf einer einzigen Ebene befinden (was selbstverständlich auch möglich wäre), sondern jeweils zwei der Öffnungen 19a, 19b bzw. 19c, 19d des Befestigungsmittels 17 sich in Anpassung an die Gehäuseform auf zwei zueinander versetzten Ebenen befinden sollen und die eine Anschlußmöglichkeit außerdem zu den anderen um 90° versetzt ist. Die Grundplatte des Befestigungsmittels 17 ist als Winkelplatte 18 mit einem längeren und einem kürzeren Schenkel ausgebildet, welche zueinander im rechten Winkel stehen. So können beispielsweise drei der Öffnungen 19a, 19c, 19d auf einer Linie und eine vierte Öffnung 19b dazu um 90° versetzt angeordnet werden. Wie insbesondere aus der Schnittansicht gemäß Fig. 5 deutlich wird, weist der längere am Übergang zum kürzeren Schenkel eine Abkragung 21 auf, die die Winkelplatte 18 einer angenommenen Form eines Gehäuses folgen läßt, so daß eine gute Auflage und Abstützung des Befestigungsmittels 17 an einem entsprechend gestalteten Gehäuse gewährleistet ist und sich jeweils zwei der Öffnungen 19a und 19b bzw. 19c und 19d in zwei verschiedenen Ebenen befinden. Die Innenflächen 20a, 20b, 20, 20c der Öffnungen 19a, 19b, 19c, 19d des Befestigungsmittels 17 sind bei dieser Ausführungsform beispielhaft als einfache Sechskante ausgebildet.

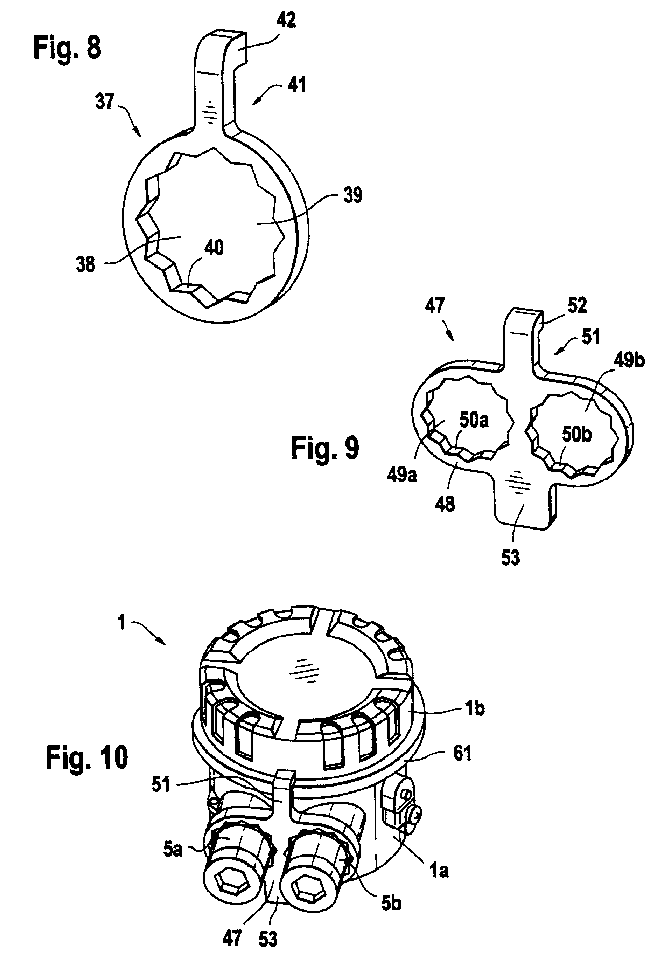

In den Fig. 6 und 7 ist eine weitere Ausführungsform eines Befestigungsmittels 27 nach der Erfindung dargestellt zur Verwendung an einem Gehäuse mit drei Anschlußmöglichkeiten, die in jeweils gleichem Abstand zueinander angeordnet sind. Hier hat eine scheibenartige Grundplatte 28 die Form eines gleichseitigen Dreiecks mit abgerundeten Ecken, und in jeder dieser Ecken befindet sich jeweils eine Öffnung 29a, 29b, 29c, mit denen das Befestigungsmittel 27, wie bereits oben beschrieben, auf Gewindeadapter an einem Gehäuse (hier nicht dargestellt, aber ähnlich denen der Abbildungen der Fig. 1a und 1b) aufgesetzt werden kann. Innenflächen 30a, 30b, 30c der Öffnungen 19a, 19b, 19c sind hier beispielhaft als doppelte Sechskante oder Zwölfkante ausgebildet.

In den Fig. 8 und 9 sind weitere Ausführungsformen der Erfindung dargestellt. Im Fall der Darstellung nach Fig. 8 hat ein Befestigungsmittel 37 in seiner Grundplatte 38 eine einzelne Öffnung 39, deren Innenfläche 40 wiederum beispielhaft als Zwölfkant ausgebildet ist. Beim Gegenstand der Fig. 9 weist eine Grundplatte 48 eines Befestigungsmittels 47 zwei Öffnungen 49a, 49b auf, deren Innenflächen 50a und 50b ebenfalls beispielhaft als doppelte Sechskante oder Zwölfkante ausgebildet sind.

Zusätzlich sind bei diesen Ausführungsformen der Erfindung jedoch Sicherungs- bzw. Verspannelemente 41 bzw. 51 vorgesehen, die jeweils von einem gekröpften Fortsatz 42 bzw. 52 der Grundplatte 38 bzw. 48 gebildet wird. Wie Fig. 10 am Beispiel des bereits in Fig. 1 dargestellten Gehäuses 1 mit einem auf die Gewindeadapter 5a, 5b aufgesetzten Befestigungsmittel 47 (nach Fig. 9) veranschaulicht, greift dessen Sicherungs- und Verspannelement 51 mit seinem gekröpften Fortsatz 52 um einen Kragen 67 des Gehäusedeckels 1b herum. Das Sicherungs- und Verspannelement 51 verhindert dadurch auf einfache Weise ein unerwünschtes Lösen des Gehäusedeckels 66 vom Gehäuse 1. Zusätzlich verhindert das Sicherungs- und Verspannelement 51 ein Verdrehen bzw. Verwinden des Befestigungsmittels 47 und stützt Gewindeadaptern 5a, 5b zusätzlich am Gehäuse 1 ab, so daß, wie gewünscht, an den Gewindeadaptern 5a, 5b angreifende höhere Momente keine Beeinträchtigungen hervorrufen. Es ist dem Fachmann klar, daß und wie er auch bei den anderen oben erwähnten Befestigungsmitteln 7, 17 und 27 (Fig. 2 bis 7) ein derartiges Sicherungs- und Verspannelement ausbilden kann.

Besonders auf die letzte vorher erwähnte Wirkung kommt es beim Befestigungsmittel 37 nach Fig. 8 an. Da dieses für Gehäuse mit nur einem einzelnen Adapter 5a oder 5b konzipiert ist, wird die Abstützung und Verspannung gegenüber einem hier nicht vorhandenen zweiten Adapter (siehe dazu Fig. 1a) vom Sicherungs- und Verspannelement 41 übernommen. Dessen gekröpfter Fortsatz 41 greift in ähnlicher Weise, wie am Beispiel des Befestigungsmittels 47 in Fig. 10 dargestellt, um den Rand 61 des Gehäusedeckels 1b herum und und verspannt das Befestigungsmittel 37 gegenüber dem Gehäuse 1. Wie das Sicherungs- und Verspannelement 51 nach Fig. 10 verhindert auch das Sicherungs- und Verspannelement 41 auf einfache Weise ein unerwünschtes Lösen des Gehäusedeckels 66 vom Gehäuse 1.

Andere Ausführungen eines solchen Sicherungs- und Verspannelements 41 für ein Befestigungsmittel 37 sind für einen Fachmann leicht vorstellbar. So kann z.B. der gekröpfte Fortsatz 41 an anderer als der dargestellten Position des Befestigungsmittels angebracht sein und mit einer anderen am Gehäuse entsprechend gestalteten Kante zusammenwirken. Das Sicherungs- und Verspannelements 41 kann beispielsweise so gestaltete sein, daß es in ein häufig auf der Mantelfläche eines Gehäuses vorhandenes Auge, z.B. für eine Verplombung, eingreift und so das Befestigungsmittel 37 und damit einen davon umschlossenen Adapter gegenüber dem Gehäuse verspannt. In einem völlig anderen Fall kann das Befestigungsmittel 37 auch mit einer Ausnehmung ähnlich der Ausnehmung 11 des in den Fig. 1a, 1b, 2 und 3 dargestellten Befestigungsmittels 7 versehen sein, die sich dann an einem entsprechenden Fortsatz oder einer Kante des Gehäuses abstützt und dort verspannt.

Eine andere vorteilhafte Ausgestaltung des Befestigungsmittels 47 wird aus der Darstellung der Fig. 9 deutlich. Neben der erwähnten Wirkung des Sicherungs- und Verspannelements 51 (siehe dazu Fig. 10) kann mit einer weiteren, zusätzlichen Anformung des Befestigungsmittels 47, die in den Fig. 9 und 10 als Abdeckplatte 53 dargestellt ist, ein vom Gehäuse vorstehendes Teil abgedeckt und geschützt werden. So kann beispielsweise die Abdeckplatte 53 dazu dienen, den im Zusammenhang mi der Beschreibung des Gehäuses 1 nach Fig. 1 erwähnten Feuchtigkeitsfilter im Fortsatz 12 des Gehäuses 1 zu schützen. Gleichzeitig kann natürlich auch die Abdeckplatte 53 bei Anlage und Abstützung an einer geeigneten Kante oder Schulter des Gehäuses 1 die vorteilhafte Wirkung des Befestigungsmittels 47 in Bezug auf die für die Adapter zulässigen Momente verstärken.

Insbesondere wenn das Befestigungsmittel eine Vielzahl von Anschlußmöglichkeiten eines Gehäuses untereinander formschlüssig verbinden soll, kann eine weitere, hier bisher nicht erwähnte bzw. nicht dargestellte Ausführung der Erfindung zum Einsatz kommen. So kann z.B. das Befestigungsmittel 7, 17, 27, 37 oder 47 so langgestreckt ausgeführt werden, daß es über die Anschlußstellen am Gehäuse hinaus beidseitig so verlängert werden, daß es sich breitflächig am Gehäuse abstützt und zusätzlich an den Adaptern angreifende Kräfte ableitet.

Die Herstellung der erwähnten Befestigungsmittel 7, 17, 27, 37, 47 ist denkbar einfach und auch bei kleinen Stückzahlen preisgünstig. Sie können in verschiedenen Formen und als metallene Ausführung aus einem Blech beispielsweise durch Stanzen oder Laserschneiden gefertigt werden; es werden keine besonderen Werkzeuge benötigt.

### BEZUGSZEICHENLISTE

- 1: Gehäuse
- 1a: Gehäuse-Grundkörper
- 1b: Gehäuse-Deckel
- 2a: Durchführung
- 2b: Durchführung
- 3a: Anschlußstutzen
- 3b: Anschlußstutzen
- 4: Mantelfläche von (1a)
- 5a: Gewindeadapter
- 5b: Gewindeadapter
- 6a: Außensechskant
- 6b: Außensechskant
- 7: Befestigungsmittel
- 8: Grundplatte
- 9a: Öffnung
- 9b: Öffnung
- 10a: Innenfläche
- 10b: Innenfläche
- 11: Ausnehmung in (8)
- 12: Fortsatz auf (4)
- 13a: Kerbnagel
- 13b: Kerbnagel

- 17: Befestigungsmittel
- 18: Winkelplatte
- 19a: Öffnung
- 19b: Öffnung
- 19c: Öffnung
- 19d: Öffnung
- 20a: Innenfläche
- 20b: Innenfläche
- 20c: Innenfläche
- 20d: Innenfläche
- 21: Abkragung

- 27: Befestigungsmittel
- 28: Grundplatte
- 29a: Öffnung
- 29b: Öffnung
- 29c: Öffnung
- 30a: Innenfläche
- 30b: Innenfläche
- 30c: Innenfläche
- 30d: Innenfläche

- 37: Befestigungsmittel
- 38: Grundplatte
- 39: Öffnung
- 40: Innenfläche
- 41: Sicherungs- und Verspannelement
- 42: gekröpfter Fortsatz von (41)

- 47: Befestigungsmittel
- 48: Grundplatte
- 49a: Öffnung
- 49b: Öffnung
- 50a: Innenfläche
- 50b: Innenfläche
- 51: Sicherungs- und Verspannelement
- 52: gekröpfter Fortsatz von (51)
- 53: Abdeckplatte

- 61: Kragen von (1b)

## Patentansprüche

1. Befestigungsmittel für Adapter und Durchführungen an Gehäusen (1), insbesondere Gehäusen mit einer Wand von geringer Stärke, in der mindestens zwei Durchführungen (2a, 2b) vorgesehen sind, die Zugänge ins Gehäuseinnere ermöglichen und mit, an oder in denen Leitungen, wie z. B. Signalleitungen, Versorgungsleitungen oder Rohre oder dgl. für ein im Gehäuse (1) befindliches Gerät durch Adapter (5a, 5b) befestigt werden; das Befestigungsmittel (7; 17; 27; 47) bestehend aus einer Grundplatte (8; 18; 28; 48) mit mindestens zwei Öffnungen (9a, 9b; 19a, 19b, 19c, 19d; 29a, 29b, 29c; 49a, 49b), die nach Form und Anordnung den Adaptern (5a, 5b) entsprechen und deren Innenflächen (10a, 10b; 20a, 20b, 20c, 20d; 30a, 30b, 30c; 50a, 50b) so geformt sind, daß die Grundplatte (8; 18; 28; 48) formschlüssig auf die Adapter (5a, 5b) paßt und diese gegeneinander formschlüssig verspannt werden.

2. Befestigungsmittel für Adapter und Durchführungen an Gehäusen (1), insbesondere Gehäusen mit einer Wand von geringer Stärke, in der mindestens eine Durchführung (2a) vorgesehen ist, die einen Zugang ins Gehäuseinnere ermöglicht und mit, an oder in der eine Leitung, wie z. B. eine Signalleitung, eine Versorgungsleitung oder ein Rohr oder dgl. für ein im Gehäuse (1) befindliches Gerät mittels wenigstens eines Adapters (5a) befestigt wird; das Befestigungsmittel (7; 37) bestehend aus einer Grundplatte (8; 38) mit mindestens einer Öffnung (9a; 39), die nach Form und Anordnung dem Adapter (5a) entspricht und deren Innenfläche (10a; 40) so geformt ist, daß die Grundplatte (8; 38) formschlüssig auf den Adapter (5a) paßt und dieser gegenüber dem Gehäuse (1) mittels wenigstens eines Sicherungs- oder Verspannelementes (11; 41) formschlüssig verspannt wird.

3. Befestigungsmittel nach einem der Ansprüche 1 oder 2, bei dem der bzw. in der Durchführung bzw. den Durchführungen (2a, 2b) befestigte, insbesondere eingeschraubte Adapter (5a, 5b) jeweils einen Außenmehrkant, vorzugsweise einen Außensechskant aufweist bzw. aufweisen und die Innenfläche bzw. Innenflächen (10; 20; 30; 40; 50) der Öffnung bzw. der Öffnungen (9a, 9b; 19a, 19b, 19c, 19d; 29a, 29b, 29c; 39; 49a, 49b) in der Grundplatte (8; 18; 28; 48) als formschlüssig darauf passender Drei-, Sechs- oder Zwölfkant ausgebildet ist bzw. sind.

4. Befestigungsmittel nach einem der Ansprüche 1, 2 oder 3, bei dem zwei oder mehr Öffnungen (9a, 9b; 19a, 19b, 19c, 19d; 29a, 29b, 29c; 39; 49a, 49b) in Reihe auf einer gemeinsamen Linie liegen.

5. Befestigungsmittel nach einem der Ansprüche 1 bis 4, bei dem die Grundplatte eine Winkelplatte (18) ist, in der mehr als zwei Öffnungen (19a, 19b, 19c, 19d) vorgesehen sind, die auf zwei winklig, vorzugsweise rechtwinklig, zueinander verlaufenden Linien liegen.

6. Befestigungsmittel nach einem der Anspruch 1 bis 5, bei dem die Grundplatte bzw. Winkelplatte (18) zur Anpassung an den Verlauf einer Gehäusewand mindestens eine Abkragung (21) aufweist und die Öffnungen (19a, 19b, 19c, 19d) in mindestens zwei verschiedenen Ebenen liegen.

7. Befestigungsmittel nach einem der Ansprüche 1 bis 5, bei dem die Grundplatte (28) die Form eines gleichseitigen Dreiecks mit abgerundeten Ecken hat und in jeder Ecke eine Öffnung (29a, 29b, 29c) liegt.

8. Befestigungsmittel nach einem der Ansprüche 1 bis 7, bei dem die Grundplatte (8; 28; 48) bzw. Winkelplatte (18) aus einem Metallblech, vorzugsweise aus rostfreiem Stahl, besteht.

9. Befestigungsmittel nach einem der Ansprüche 1 bis 7, bei dem die Grundplatte (8; 28; 48) bzw. Winkelplatte (18);aus einem glasfaserverstärktem Kunststoff besteht.

10. Befestigungsmittel nach einem der Ansprüche 1 bis 9, bei dem das Sicherungs- bzw. Verspannelement eine besonders geformte Ausnehmung (11) der Grundplatte (8) ist, in die ein entsprechender Fortsatz (12) des Gehäuses (1) ein- bzw. formschlüssig angreift.

11. Befestigungsmittel nach einem der Ansprüche 1 bis 9, bei dem das Sicherungs- bzw. Verspannelement (4; 51) wenigstens ein an die Grundplatte (38; 48) angeformter gekröpfter Fortsatz (42; 52) ist, der mit einem entsprechenden Widerlager (61) des Gehäuses (1) zusammenwirkt.
